Europäisches Patentamt

European Patent Office

Office européen des brevets

(19)

(11) Publication number: **0 577 222 A1**

(12) ## EUROPEAN PATENT APPLICATION

(21) Application number: **93201940.9**

(22) Date of filing: **02.07.93**

(51) Int. Cl.5: **A23L 1/015**, A01G 7/02

(30) Priority: **02.07.92 NL 9201177**

(43) Date of publication of application:
**05.01.94 Bulletin 94/01**

(84) Designated Contracting States:
**AT BE CH DE DK FR GB IE LI LU NL SE**

(71) Applicant: **BAKKER PANKLAAR B.V.**
**Handelscentrum Z.H.Z. 43,**
**P.O. Box 1164**
**NL-2990 CA Barendrecht(NL)**
Applicant: **INSTITUUT VOOR**
**AGROTECHNOLOGISCH ONDERZOEK**
**(ATO-DLO)**
**Haagsteeg 6,**
**Postbus 17**
**NL-6700 AA Wageningen(NL)**

(72) Inventor: **Eenink, Albert Hendrik**
**Everlaan 3**
**NL-6706 DJ Wageningen(NL)**
Inventor: **Jongen, Wilhelmus Maria**
**Franciscus**
**Goudreinet 16**
**NL-6671 ED Zetten(NL)**
Inventor: **van Kooten, Olaf**
**Gruttelweide 101**
**NL-6708 BD Wageningen(NL)**

(74) Representative: **de Bruijn, Leendert C. et al**
**Nederlandsch Octrooibureau**
**Scheveningseweg 82**
**P.O. Box 29720**
**NL-2502 LS Den Haag (NL)**

(54) **Method of quickly and significantly lowering the nitrate content of plant material.**

(57) The present invention relates to a method of lowering the nitrate content of plant material. During cultivation plants take up nitrate from the soil through the fertilisers present therein. The nitrate is stored in internal reservoirs such as, among others, the vacuoles, and during photosynthesis it is largely converted to, among others, amino acids and proteins. If, during cultivation there is little light, situations arise when nitrate is taken up but no longer converted, and this results in accumulation of nitrate in, inter alia, the vacuoles. The subject invention is directed at a method of lowering the nitrate content in plant material, characterised in that the plant material is subjected to a treatment with a gas mixture having a $CO_2$ content between 0.035 and 100 vol % and that the plant material is also exposed to light after measures have been taken to prevent the plant material from taking up sources of nitrate or nitrate formation.

EP 0 577 222 A1

Rank Xerox (UK) Business Services
(3.10/3.6/3.3.1)

The present invention relates to a method of lowering the nitrate content of plant material. During cultivation plants take up nitrate from the soil through the fertilizers present therein. The nitrate is stored in internal reservoirs such as, among others, the vacuoles, and during photosynthesis it is largely converted to, among others, amino acids and proteins. If, during cultivation there is little light, situations arise when nitrate is taken up but no longer converted, and this results in accumulation of nitrate in, inter alia, the vacuoles.

From the viewpoint of public health, high nitrate contents in food plants, for example foliage plants, stem and stalk plants, bulbous plants, tuberous plants and fruit-bearing plants, are undesirable. Nitrate is converted, specifically by bacteria in the oral cavity and the gastrointestinal tract, to nitrite which is bonded to the haemoglobin of the erythrocytes, so that the oxygen-binding capacity of blood is reduced. In addition, under acidic conditions such as occur, for example, in the stomach, nitrite can react with secondary amines and amides to form mutagenic or even highly carcinogenic N-nitroso compounds.

With a view to public health, a standard has therefore been established for the acceptable daily intake (ADI) of nitrate, and recent investigations have shown that this standard is regularly exceeded in the Netherlands. The contribution of vegetables to the overall intake of nitrate by the consumers is estimated to be 60-70%. Nitrate is especially taken up by consumption of leaf vegetables, but other food plants may also contain considerable nitrate levels. For this reason, the authorities in the Netherlands and elsewhere in Western Europe (Germany and Switzerland, among others) have laid down stringent standards regarding the acceptable nitrate contents in plants and plant-like products such as lettuce, purslane, spinach, radishes, etc. In the near future, these standards will be made even more stringent. At present, the standards are already so stringent in a number of foreign countries that the Dutch growers cannot meet these standards with their products.

In the Netherlands, in particular in food plants cultivated during seasons with little light, for example autumn and winter, the nitrate contents found in products are such that cultivation, consumption and export of vegetables, e.g. lettuce and spinach, are severely impaired or become impossible.

The seriousness of the presence of nitrate in plant material and the more stringent regulations of national authorities such as the Ministry of Agriculture, Conservation and Fishing, have led to investigations aimed at lowering the nitrate content in plant material. The investigations carried out so far into lowering the nitrate content in plant material are aimed at factors such as the type of fertiliser applied to the soil, the quantity and the time of metering the fertiliser employed, the conversion of fertiliser into nitrate in the soil, the uptake of nitrate by the plant and the conversion and decrease in the plant during cultivation. The investigations carried out so far have been aimed at methods of lowering the uptake of nitrate by the plant during cultivation and of lowering the nitrate contents by improvement of the plants. No attention has been paid to methods of influencing the conversion of nitrate in the plant after harvesting.

The present method of lowering the nitrate content of plant material is characterised in that the plant material is subjected to a treatment with a gas mixture having a $CO_2$ content between 0.035 and 100 vol % and in that the plant material is also exposed to light after measures have been taken to ensure that the plant material can no longer take up any source of nitrate or sources for nitrate formation.

The method according to the invention can be carried out during cultivation if the growth medium of the plant material is deprived of any sources for additional nitrate formation a maximum of twenty days before the harvest. In the case of plants which are cultured, for example, on liqud beds such as is sometimes the case with lettuce, the liquid bed can be provided with a nitrate-free or low-nitrate medium, e.g. water, as the sole nutrient medium twenty days before the harvest . By treating the plant further according to the present method in which the plant material is treated with gas having a $CO_2$ content which is higher than that usually present in air, specifically a content which is higher than 0.035 vol %, and by additionally exposing the plant material to light, it is possible to achieve a considerable lowering of the nitrate content. The method according to the invention can also be carried out closer to the harvest time, for example ten to seven days before the harvest. The duration of treatment is not critical and will depend, inter alia, on a number of factors such as the desired nitrate content which ultimately has to be obtained and is present in the plant material, the $CO_2$ content, the light intensity, etc.

In the present method, the nitrate content is lowered, on the one hand, because no nutrients are taken up which are sources for additional nitrate formation. On the other hand, the photosynthesis is stimulated by exposure to light and treatment with a gas having a higher $CO_2$ content than is usually present in the air. In the conversion of nitrate to products which can be used for assimilation in the plant material, the enzyme nitrate reductase plays an essential role. The activity of this enzyme is light-dependent, among other things, and therefore depends on the photosynthesis process with takes place during exposure to light. Promotion of the photosynthesis process leads to consumption of the nitrate supplies present, and the plant material will usually supplement these supplies by taking up nitrogen-containing nutrients. However, in the present method measures are taken to ensure that the plant material can no longer supplement its nitrate supply.

Promotion of the photosynthesis process together with the prevention of the uptake of nitrate supplies according to the present method leads to lowering of the nitrate content.

In addition, surprisingly, the method according to the invention can be used advantageously after harvesting. In that case, harvesting must be regarded as being that measure in the method according to the invention which ensures that the plant material can no longer take up any nitrate source or any source for nitrate formation. The surprising feature of this embodiment of the invention resides in the fact that the photosynthetic activity of plant material can be influenced even after harvesting. Up to now it was assumed that no photosynthesis could take place after harvesting since the gas exchange necessary for the photosynthesis takes place via stomatal openings and stomatal openings are closed under conditions of stress. It has now been found, however, that the photosynthetic activity can be influenced to a large degree after harvesting. The method according to the invention carried out on the material after harvesting can lead to a significant lowering of the nitrate content.

In particular, it has now been found that the lowering of the nitrate content according to the present method proceeds more readily if the $CO_2$ concentration of the gas mixture with which the plant material is treated is higher. Already at a $CO_2$ concentration of 1 vol %, the nitrate content decreases. This effect is even more noticeable at a $CO_2$ content of 5 vol %.

Of course, it was well known that a high $CO_2$ content stimulates the photosynthetic activity, but an excessively high $CO_2$ content in excess of 0.3 vol % was disadvantageous for plant material during cultivation.

The consequence of storing a plant which has already been harvested solely under light and standard air, that is to say, 0.035 vol % $CO_2$ and 20 vol % $O_2$, was investigated. Such a treatment did not automatically lead to nitrate reduction. Lettuce was exposed for 8 hours to light at 300 $\mu$mol m$^{-2}$ s$^{-1}$ at 23°C under standard air and the lettuce thus treated did not show any nitrate reduction on investigation. Storage under comparable conditions, where the lettuce is packaged in regular plastic in the form usually available in shops, did not lead to any significant lowering of the nitrate content either.

Tests were also carried out with whole lettuces stored for 24 hours under relatively mild light conditions (+ 50 $\mu$mol m$^{-2}$ s$^{-1}$ PAR) and under 1-5 vol % $CO_2$. Under 1 vol % $CO_2$ there was hardly any decrease in the nitrate content, but at 5 vol % $CO_2$ a significant decrease of approximately 18 %, based on dry matter, was measured (Table 1).

Table 1

**The effect of storage conditions on a few quality parameters of lettuce (moisture content and nitrate content)**

| | [NO3] mg gDRW.1 | % w | p< | [NO3] mg gFRW.1 | % w | p< | % v | % w | p< |
|---|---|---|---|---|---|---|---|---|---|
| Control | 118.3 ± 2.9 | 100 | - | 4323 ± 161 | 100 | - | 3.74 ± 0.08 | 100 | - |
| 0.035 % CO2 | 107.0 ± 3.9 | 90.4 | ns | 4340 ± 130 | 100 | ns | 3.84 ± 0.10 | 102.7 | ns |
| 5 % CO2 | 96.1 ± 1.4 | 81.2 | 0.001 | 3823 ± 37 | 88 | 0.05 | 4.00 ± 0.03 | 107.0 | 0.05 |
| Control | 120.4 ± 4.7 | 100 | - | 4317 ± 155 | 100 | - | 3.59 ± 0.04 | 100 | - |
| 0.035 % CO2 | 120.2 ± 1.7 | 99.8 | ns | 4699 ± 71 | 109 | ns | 3.91 ± 0.06 | 108.9 | 0.01 |
| 1 % CO2 | 117.2 ± 2.5 | 97.3 | ns | 4519 ± 56 | 105 | ns | 3.86 ± 0.05 | 107.2 | 0.01 |

These results clearly indicate that the nitrate content of a harvested product can be influenced if the product is exposed to light in combination with a $CO_2$ content higher than that in standard air.

The method according to the invention can therefore be carried out using a gas mixture containing 0.035-100 vol % $CO_2$, better results being obtained if the gas mixture contains more than 0.3 vol % $CO_2$ and even better results being obtained if the gas mixture contains 1-15 vol % $CO_2$. As already indicated in the tests. good results are obtained with gas mixtures containing 1 vol %, 5 vol % or 10 vol % $CO_2$ using the present method.

In addition to the $CO_2$ content, other parameters which may influence the nitrate content in plant material when carrying out the method according to the invention were also investigated.

The amount of oxygen present in the gas mixture is not critical for the method according to the invention, but treatment of the plant material according to the present method with a gas mixture having a concentration of $CO_2$ has a favourable effect on the lowering of the nitrate content.

The results of the present method appear to be better when the gas mixture contains less oxygen than is usually present in standard air. Normally, standard air contains about 21% $O_2$. It was found that treatment of the plant material according to the present method with a gas mixture having a volume percentage of 2% $O_2$ in combination with a $CO_2$ content higher than 0.035 vol % leads to a greater reduction of the nitrate content than treatment with a gas mixture having only a $CO_2$ content higher than 0.035% and a volume percentage of $O_2$ such as is usually present in air (about 21 vol %).

The method according to the invention can even be carried out with a gas mixture containing 0.035 % $CO_2$ and 0% oxygen or in a variety of other mixing ratios of $CO_2$ and $O_2$, a low $O_2$ volume percentage being preferred. The method according to the invention is advantageously carried out if a gas mixture containing $O_2$ in the range from 0 to 21 vol %, preferably 0-15 vol %, is used.

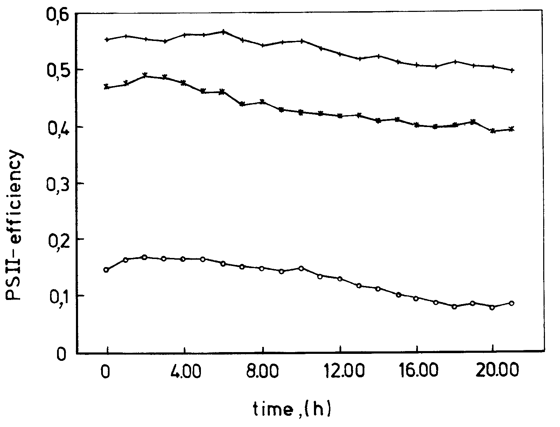

Tests were carried out with chlorophyll fluorescence, and in these the photosynthesis activity was measured for various gas conditions. In the figure, the photosynthesis activity is expressed as PSII efficiency and given for different gas conditions. A relatively high $CO_2$ content (1%) in combination with a relatively low $O_2$ range (2%) led to a clearly higher PSII efficiency under a high light intensity (400 $\mu$mol $m^{-2}$ $s^{-1}$) as compared to standard air. The course of the PSII efficiency is given for three different gas conditions:

$\circ$ = 0.035 vol % $CO_2$, 2 vol % $O_2$;

\* = 1 vol % $CO_2$, 21 vol % $O_2$;

+ = 1 vol % $CO_2$, 2 vol % $O_2$.

Another factor which may be important for the degree of nitrate reduction when using the method according to the invention is the relative humidity in the environment in which the harvested product is kept. Low relative atmospheric humidity may lead to loss of moisture. Such a loss of moisture can be prevented by ensuring high relative atmospheric humidity. The moisture content of the product should be kept at the same level since drying-out can counterbalance, partially or completely, a reduction already achieved in the nitrate content based on dry matter if the ultimate effect, i.e. the nitrate content based on fresh weight, is taken into account.

The relative atmospheric humidity of the environment in which the method according to the invention is carried out should preferably be more than 90%, a relative atmospheric humidity of 95-100% being especially preferred.

Another factor influencing the moisture content of the product is the temperature at which the method is carried out. Tables 2 and 3 show the consequences of carrying out the present method at different temperatures.

### Table 2

### Nitrate content of lettuce under different storage conditions regarding light, temperature and CO₂ content

| The influence of light, temperature and $CO_2$ content of the atmosphere on the nitrate content of lettuce during storage | | | | | | |
|---|---|---|---|---|---|---|
| T(h) | Light ($\mu molm^{-2}g^{-1}$ PAR) | $CO_2$(%) | t (°C) | % DW | $NO_3$ ($mgg^{-1}$ DW) | $NO_3$ ($mgkg^{-1}$ FW) |
| 0 | -- | -- | -- | 3.4 | 103 | 3520 |
| 24 | 0 | 0.035 | 4 | 3.7 | 88 | 3290 |
| 24 | 0 | 0.035 | 20 | 4.0 | 86 | 3470 |
| 24 | 0 | 10 | 4 | 3.8 | 82 | 3120 |
| 24 | 0 | 10 | 20 | 4.3 | 79 | 3410 |
| 24 | 400 | 0.035 | 4 | 3.3 | 79 | 2570 |
| 24 | 400 | 0.035 | 20 | 4.8 | 85 | 4050 |
| 24 | 400 | 10 | 4 | 3.0 | 71 | 2120 |
| 24 | 400 | 10 | 20 | 4.3 | 84 | 3630 |

Table 3

| The nitrate content of lettuce after 24-hour storage under different storage conditions regarding light, temperature and $CO_2$ content of the atmosphere, by reference to the content at t = 0 (starting product). | | | | |
|---|---|---|---|---|
| Light ($\mu molm^{-2}g^{-1}$ PAR) | $CO_2$ (%) | t (°C) | $NO_3$ content (based on DW) w.r.t. t = 0 (%) | $NO_3$ content (based on FW) w.r.t. t = 0 (%) |
| 0 | 0.035 | 4 | 85.4 | 93.5 |
| 0 | 0.035 | 20 | 83.5 | 98.6 |
| 0 | 10 | 4 | 79.6 | 88.6 |
| 0 | 10 | 20 | 76.7 | 96.9 |
| 400 | 0.035 | 4 | 76.7 | 73.0 |
| 400 | 0.035 | 20 | 82.5 | 115.1 |
| 400 | 10 | 4 | 68.9 | 60.2 |
| 400 | 10 | 20 | 81.6 | 103.1 |

Although the conversion mechanisms in principle take place more quickly when the temperature is higher, a relatively high temperature does not appear to be very suitable, due to the higher drying-out pressure.

The temperature at which the method is carried out is not critical but the method is preferably carried out between -20 and 45°C, especially preferably between 0°C and 40°C and in particular at a temperature between 2 and 35°C.

For example, during 24-hour treatment under fairly extreme conditions, that is to say, a temperature T = 4-15°C and 10 vol % $CO_2$ on exposure to light at 220-280 $\mu mol$ $m^{-2}$ $s^{-1}$ PAR (photosynthetic active radiation), a reduction in the nitrate content of almost 40%, based on fresh weight, is achieved.

Other factors which can influence the result of the method according to the invention but which are not critical are the wavelength and the intensity of the light to which the product is exposed. It is possible to use light of different wavelengths and with different intensities in a method according to the invention.

It has been found, however, that a treatment can be shortened if a high light intensity is combined with a high $CO_2$ content. Tables 4 and 5 show the results of experiments with lettuce in which the nitrate content was determined after 8 hours and 24 hours for a treatment at 20°C.

<u>Table 4</u>

<u>Nitrate content of lettuce at different storage conditions as regards light and $CO_2$ content</u> ($t_{storage}$ = ± 20°C)

| The influence of light and $CO_2$ content of the atmosphere on the nitrate content of lettuce during storage for 8 and 24 hours at 20°C (experiment F11) | | | | | |
|---|---|---|---|---|---|
| T(h) | Light ($\mu mol^{-2}g^{-1}$ PAR) | $CO_2$ (%) | % DW | $NO_3$ ($mgg^{-1}$ DW) | $NO_3$ ($mgkg^{-1}$ FW) |
| 0 | -- | -- | 4.1 | 103 | 4185 |
| 8 | 0 | 0.035 | 4.5 | 107 | 4800 |
| 24 | 0 | 0.035 | 5.1 | 92 | 4700 |
| 8 | 0 | 10 | 4.5 | 93 | 4150 |
| 24 | 0 | 10 | 5.1 | 77 | 3900 |
| 8 | 400 | 0.035 | 4.4 | 90 | 3980 |
| 24 | 400 | 0.035 | 6.0 | 88 | 5240 |
| 8 | 400 | 10 | 4.7 | 79 | 3670 |
| 24 | 400 | 10 | 5.5 | 72 | 3960 |

Table 5

| The nitrate content of lettuce after storage for 8 and 24 hours at 20°C under different storage conditions as regards light and $CO_2$ content in the atmosphere, relative to the content at t = 0 (starting product) (experiment F11) | | | | |
|---|---|---|---|---|
| Time(h) | Light ($\mu molm^{-2}g^{-1}$ PAR) | $CO_2$ (%) | $NO_3$ content (based on DW) w.r.t. t = 0 (%) | $NO_3$ content (based on FW) w.r.t. t = 0 (%) |
| 8 | 0 | 0.035 | 103.3 | 114.8 |
| 24 | 0 | 0.035 | 88.8 | 112.4 |
| 8 | 0 | 10 | 90.5 | 99.2 |
| 24 | 0 | 10 | 74.5 | 93.2 |
| 8 | 400 | 0.035 | 86.9 | 95.1 |
| 24 | 400 | 0.035 | 85.3 | 112.5 |
| 8 | 400 | 10 | 76.4 | 87.7 |
| 24 | 400 | 10 | 69.8 | 94.6 |

Based on dry matter, the reduction ef the nitrate content after 8 hours is 21%, and this reduction increases to 28% after 24 hours of treatment. The last 16 hours contribute relatively little to the reduction. namely 75%. If only $CO_2$ is present at a high dose, this extra gain is 16%, the reduction after 24 hours being 23% based on dry matter.

A high light intensity under normal atmospheric circumstances has little effect, if any, and this is comparable to the decrease in nitrate on storage under standard conditions (in the dark and with 0.035% $CO_2$.

Combination of a high light intensity and a high $CO_2$ content in the present method can therefore lead to quicker nitrate reduction. However, the disadvantage of an excessively high storage temperature is illustrated once again by this experiment, since drying-out leads to a smaller reducing effect, based on fresh weight, or even to counter-balancing of these effects.

The method according to the invention can advantageously be carried out with light having a wavelength between 350 and 750 nm and an intensity between 1 and 5000 $\mu$mol m$^{-2}$ s$^{-1-}$ PAR.

The method according to the invention can be carried out for any period of time. The present invention should preferably be carried out after harvesting for a period of between 0.1 and 48 hours. The treatment period depends on the desired decrease in the nitrate content as well as on other circumstances in which the method is carried out, for example light intensity, the light wavelength used, the temperature at which the method is carried out and the composition of the gas mixture with which the plant material is treated. Economic and practical considerations will also play a role.

For lettuce, for example, the optimum ranges for the treatment according to the present method are as follows:

- a temperature between 0 and 8°C, preferably 4°C;
- a relative atmospheric humidity between 90 and 100%, preferably 95%;
- a $CO_2$ content between 5 and 15 vol %, preferably about 10 vol %;
- an $O_2$ concentration between 0.1 and 4 vol %, preferably about 2 vol %;
- a light intensity between 250 and 350 $\mu$mol m$^{-2}$ s$^{-1}$ PAR, preferably 280 umol m$^{-2}$ s$^{-1}$ PAR;
- a light wavelength between 350 and 750 nm, preferably between 40 and 700 nm; and
- a treatment period between 4 and 36 hours, preferably 12 hours.

Treatment of lettuce according to the present method in which the above limits of the various parameters are observed leads to a lowering of the nitrate content by 40%, based on fresh weight.

The optimum values for the parameters to be used for other plants will be somewhat different for each plant. The method according to the present invention can be applied to all plants having a high nitrate content, that is to say, plant material having a nitrate content in excess of 500 mg/kg fresh weight. Suitable plant materials are the plants belonging to the following species:

Lactuca (lettuce), Valerianella (lamb's lettuce), Spinacea (spinach), Cichorium (endive), Raphanus (radishes) and Brassica (cabbage). Suitable plants are endive, butterhead lettuce, iceberg lettuce, lamb's lettuce, Lollo Bionda, Lollo Rossa, curly endive, oak leaf lettuce, paksoi, Chinese cabbage, purslane, spinach, turnip tops, Lactula sativa var. romana, celeriac, celery, parsley, chives, garden herbs, Baby gem.

Except for plant improvement, all other studies and activities directed at lowering the nitrate content in plant material have hitherto produced little result, or none at all. The prospects for plant improvement are such that the new species will probably contain about 20% less nitrate.

The method according to the invention thus enables a significant decrease in the nitrate content of plants, i.e. between 20 and 40% to be achieved. This is a decrease which has not yet been achieved by any other study. Specifically, this decrease can be achieved shortly before harvesting or in the post-harvest period, that is to say, in the marketing chain.

The present method has a number of considerable advantages, for example:

- a short treatment period of the plant material for achievement of the desired result;
- an environmentally and user friendly solution to an important problem;
- an economically especially advantageous method for lowering the nitrate content in plant material;
- a method in which the reduction in the nitrate contents can be especially high, namely between 20 and 40%;
- a method in which the reduction in the nitrate contents can be achieved in any type of plant material having a high nitrate content and is therefore not restricted to a particular species or genus;
- a very simple method for lowering the nitrate content having the considerable advantage that this method can be integrated in the marketing chain;
- the method can, in addition, be employed at different points in the marketing chain.

Firstly, the method according to the invention can be carried out in the greenhouse during periods shortly before or immediately after harvesting. Secondly, the present method can be carried out by the wholesaler/exporter in purpose-built treatment cabins or, thirdly, by the auctioneers in the already-present refrigerating tunnels and cold stores. Moreover, treatment of the plant material according to the present method can possibly be carried out during transportation and even in a superstore in special or modified display cases.

It is even possible to carry out the present method by harvesting the plant material, subsequently packaging it in an air-tight, transparent material and then exposing it to light. In this packaging, the plant forms a gas mixture, and in combination with the above-mentioned light this results in a significant drop in the nitrate content. The present invention is therefore also aimed at an embodiment of the present method in which plant material having a nitrate content in excess of 500 mg/kg fresh weight is subjected to a treatment with a gas having a $CO_2$ content above 0.035%, in that the plant material is packaged in an air-tight transparent material after the plant material has been removed from the growth medium, that is to say, after harvesting.

The present invention also relates to plant material obtained using the method for lowering the nitrate content in the various embodiments described. In particular, the invention relates to plant material which has a nitrate content in excess of 500 mg/kg fresh weight immediately after harvesting or during cultivation and is packaged in an air-tight, transparent material after removal of the plant material from the growth medium, that is to say, after harvesting.

**Claims**

1. Method of lowering the nitrate content in plant material, characterised in that the plant material is subjected to a treatment with a gas mixture having a $CO_2$ content between 0.035 and 100 vol % and that the plant material is also exposed to light after measures have been taken to prevent the plant material from taking up sources of nitrate or nitrate formation.

2. Method according to claim 1, characterised in that the measure for preventing uptake of sources of nitrate or nitrate formation comprises removal of the plant material from the growth medium, for example by harvesting the plant material.

3. Method according to claim 1, characterised in that the measure for preventing uptake of sources of nitrate or nitrate formation is started a maximum of 20 days before removal of the plant material from the growth medium, for example a maximum of 20 days before harvesting, providing the plant material with a nitrate-free or low-nitrate nutrient medium from that point in time.

4. Method according to one of the preceding claims, characterised in that the gas mixture has a $CO_2$ content between 0.1 and 100 vol %, preferably between 0.3 and 100 vol %, especially preferably between 1 and 100 vol %, in particular between 5 and 100 vol %.

5. Method according to one of the preceding claims, characterised in that the gas mixture also has an $O_2$ content between 0 and 21 vol %, preferably between 0 and 15 vol %.

6. Method according to one of the preceding claims, characterised in that the plant material is treated at a relative atmospheric humidity between 90 and 100%, preferably between 95 and 100%.

7. Method according to one of the preceding claims, characterised in that the treatment is carried out at a temperature in the range between - 20°C and 45°C, preferably between 0°C and 40°C, especially preferably 2-35°C.

8. Method according to one of the preceding claims, characterised in that the treatment is carried out for at least 0.1 hour, preferably for from 4 to 48 hours.

9. Method according to one of the preceding claims, characterised in that the plant material having a nitrate content in excess of 500 mg/kg fresh weight is subjected to treatment with a gas having a $CO_2$ content in excess of 0.035% by packaging the plant material in an air-tight, transparent material after removal of the plant material from the growth medium, that is to say, after harvesting.

10. Harvested plant material packaged in an air-tight, transparent material, which plant material has a nitrate content in excess of 500 mg/kg fresh weight immediately after harvesting or during cultivation.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | CHEMICAL ABSTRACTS, vol. 107, no. 17, 1986, Columbus, Ohio, US; abstract no. 153010f, ABO-BAKR 'changes in nitrate and nitrite contents of fresh egyptian vegetables during storage.' * abstract * & FOOD AND FEED CHEMISTRY vol. 7, no. 4, pages 515 - 528 --- | 1,2,7,9 | A23L1/015 A01G7/02 |
| A | CHEMICAL ABSTRACTS, vol. 117, no. 23, 1992, Columbus, Ohio, US; abstract no. 232622s, YANG YONG JOON 'effect of storage treatment on nitrate and nitrite contents in vegetables' * abstract * & FOOD AND FEED CHEMISTRY vol. 17, no. 10, pages 125 - 131 --- | 1,2,9,10 | |
| A | CHEMICAL ABSTRACTS, vol. 100, no. 11, 1983, Columbus, Ohio, US; abstract no. 84749v, DRESSEL JUNG 'nitrate fertiliser : effect on the nitrate content of plants' * abstract * & FERTILIZERS, SOILS, AND PLANT NUTRITION vol. 19, no. 5, pages 155 - 165 --- | 1,2,3 | TECHNICAL FIELDS SEARCHED (Int. Cl.5 )  A23L A01G |
| A | EP-A-0 140 361 (IKEDA)  * the whole document *  ----- | 1,4,6,7, 8 | |

The present search report has been drawn up for all claims

| Place of search | Date of completion of the search | Examiner |
|---|---|---|
| THE HAGUE | 06 OCTOBER 1993 | VERMANDER R.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)